Europäisches Patentamt

European Patent Office

Office européen des brevets

(11) Veröffentlichungsnummer : **0 027 969**
**B1**

(12) **EUROPÄISCHE PATENTSCHRIFT**

(45) Veröffentlichungstag der Patentschrift :
09.03.83

(21) Anmeldenummer : 80106322.3

(22) Anmeldetag : 17.10.80

(51) Int. Cl.³ : **G 03 B 17/26**, G 03 B 21/32,
G 03 B 27/32

(54) Magazin für Mikrorollfilm sowie hierfür geeignetes Mikrofilm-Lesegerät.

(30) Priorität : 27.10.79 DE 2943489

(43) Veröffentlichungstag der Anmeldung :
06.05.81 Patentblatt 81/18

(45) Bekanntmachung des Hinweises auf die Patenterteilung : 09.03.83 Patentblatt 83/10

(84) Benannte Vertragsstaaten :
CH FR GB IT LI

(56) Entgegenhaltungen :
AT B 305 770
DE A 2 538 731
FR A 1 024 240
FR A 1 579 920
US A 3 498 707
US A 3 685 893
US A 4 021 005

(73) Patentinhaber : AGFA-GEVAERT Aktiengesellschaft
D-5090 Leverkusen 1 (DE)

(72) Erfinder : Nabl, Peter
Bahnhofstrasse 21
D-8035 Gauting (DE)
Erfinder : Rauffer, Walter
Kurt-Eisner-Strasse 41
D-8000 München 83 (DE)
Erfinder : Dietrich, Karl-Heinz
Bozener Strasse 7
D-8000 München 90 (DE)

Magazin für Mikrorollfilm sowie hierfür geeignetes Mikrofilm-Lesegerät

Die Erfindung betrifft ein Magazin mit einer Spule für Mikrorollfilm, welches in ein Mikrofilm-Lesegerät mit einer Antriebsvorrichtung für eine in einem Projektionsmagazin befindliche Vorratsspule einsetzbar ist.

Magazine dieser Gattung sind beispielsweise bekannt durch die FR-A 1 579 920 oder durch die US-A 3 498 707.

In den letzten Jahren finden bei der Wiedergabe von auf Mikrorollfilm gespeicherter Information in einem Mikrofilm-Lesegerät in erheblichem Umfang Magazine Verwendung, in denen eine Spule mit Mikrorollfilm gelagert ist. Derartige Magazine werden in das Lesegerät eingelegt oder eingeschoben, wonach durch Betätigung entsprechender Bedienungselemente das Ende des Mikrorollfilms selbsttätig aus dem Magazin in die geräteseitige Führungsbahn für den Mikrorollfilm ausgefädelt wird. Die Positionierung des ausgewählten Bildes des Mikrorollfilms im Bereich des Abbildungsobjektives des Lesegerätes erfolgt häufig ebenfalls bereits selbsttätig, so daß bei solchen Lesegeräten neuerer Bauart aufgrund elektrischer und elektronischer Steuerungen ein hoher Grad an Automatisierung erreicht wird.

Umso ärgerlicher ist es für den Benutzer, wenn dieser trotz des hohen Bedienungskomforts der neueren Mikrorollfilm-Lesegeräte die ihm zur Verfügung stehenden, auf den Spulen aufgewickelten Mikrorollfilme häufig in Ermangelung eines geeigneten Zusatzgerätes in umständlicher und zeitraubender Weise von Hand umspulen muß.

Die Notwendigkeit des Umspulens der Mikrorollfilme ergibt sich z. B. dann, wenn die Vorlagen im sogenannten Duo-Verfahren aufgenommen wurden. Hierbei werden die Vorder- bzw. Rückseiten der zu verfilmenden Vorlagen auf jeweils die halbe Filmbreite aufgenommen, wobei die Laufrichtung des Films während der Aufnahme der Vorder- bzw. Rückseiten der Vorlagen jeweils entgegengesetzt ist. Beim Wechsel der Betrachtung von Bildern aus der oberen bzw. unteren Filmhälfte ist der Film daher umzuspulen.

Des weiteren liegt bei der Mikrofilmaufnahme je nach Typ des Aufnahmegerätes und der Entwicklungsmaschinen die Filmemulsion in Wickelrichtung des Films gesehen entweder innen oder außen. Die Mikrofilm-Lesegeräte sind jedoch in aller Regel so gebaut, daß die Filmemulsion des verwendeten Rollfilms immer innen oder immer außen liegen muß. Es ergibt sich daher für den Benutzer die Notwendigkeit, bei falscher Emulsionslage den Film umzuspulen.

Auch in den Fällen, in denen die in aller Regel lose um den Spulenkern gewickelten Filmenden am Spulenkern befestigt werden müssen, ist es nötig, den Film zunächst auf eine andere Spule umzuspulen, damit das zu sichernde Filmende zugänglich wird.

Der Erfindung liegt nunmehr die Aufgabe zugrunde, auf einfache Weise und ohne Zuhilfenahme von Zusatzgeräten ein Umspulen von Mikrorollfilm von einer Spule auf eine andere Spule zu ermöglichen.

Diese Aufgabe wird erfindungsgemäß gelöst durch die Merkmale des Hauptanspruchs. Weitere vorteilhafte Merkmale der Erfindung sind den Unteransprüchen entnehmbar.

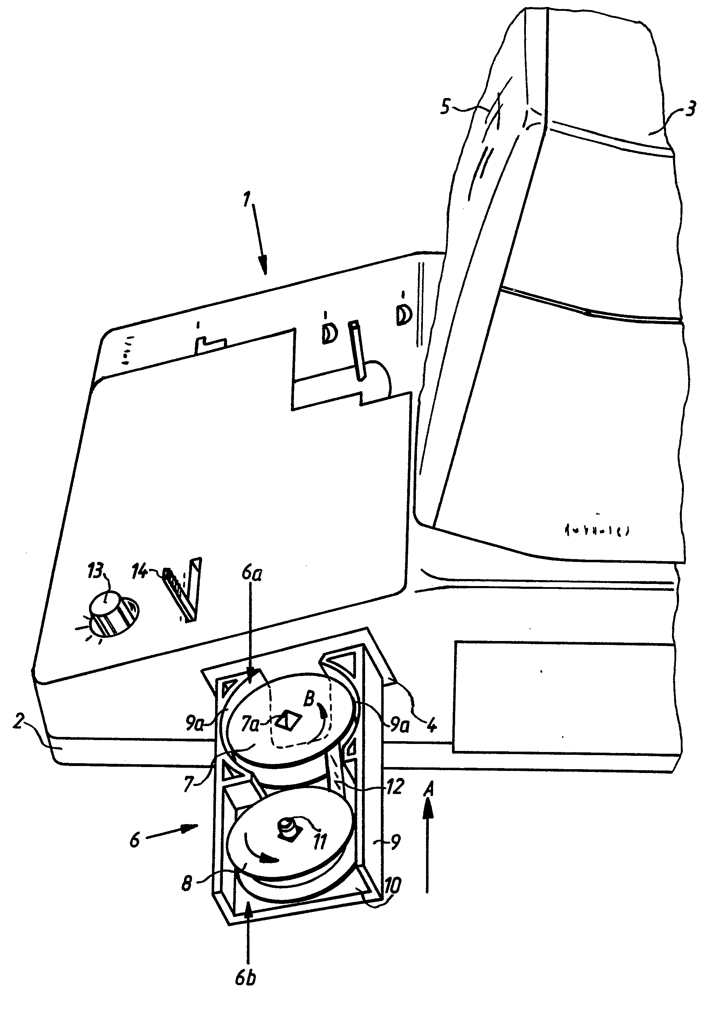

Im folgenden wird ein Ausführungsbeispiel der Erfindung anhand der Zeichnung näher beschrieben. Die einzige Figur der Zeichnung zeigt ein erfindungsgemäßes Magazin mit zwei eingelegten Spulen und einem hierfür geeigneten Mikrofilm-Lesegerät in halbschematischer Darstellung.

In der Figur ist mit der Bezugsziffer 1 ein Mikrofilm-Lesegerät bezeichnet, welches ein Geräte-Unterteil 2 sowie ein haubenartiges Geräte-Oberteil 3 umfaßt. Das Geräte-Unterteil weist seitlich einen Magazinschacht 4 zur Aufnahme eines Magazins für Mikrorollfilm auf. Wird ein Magazin in den Magazinschacht geschoben und ein entsprechendes Betätigungselement betätigt, so wird ein antreibbarer Wickeldorn in die zentrale Ausnehmung der innerhalb des Magazins gelagerten Filmspule geschoben und die Spule angetrieben. Über einen hier nicht näher zu erläuternden Ausfädelmechanismus wird das Filmende aus dem Magazin selbsttätig ausgefädelt und einer Transporteinrichtung zugeführt, die den Mikrofilm an einer innerhalb des Geräte-Unterteils 2 angeordneten Abbildungseinrichtung vorbeiführt. Das zu projizierende Bild des Mikrofilms wird zum Betrachten auf den an der Vorderseite des Geräte-Oberteils 3 angeordneten Durchlicht-Projektionsschirm 5 projiziert.

Das Umspulmagazin 6 ist so ausgelegt, daß seine Breite und Höhe denjenigen Magazinen entsprechen, die normalerweise im Zusammenhang mit dem dargestellten Lesegerät Verwendung finden. Die Länge des Umspulmagazins beträgt in etwa die doppelte Länge eines üblichen Magazins. Das Umspulmagazin 6 ist in zwei in Einschubrichtung A des Magazins gesehen hintereinander liegende Magazinkammern 6a, 6b aufgeteilt, in denen jeweils eine Spule 7 bzw. 8 drehbar gelagert werden kann. In der in Einschubrichtung A gesehen vorderen Magazinkammer 6a wird die Spule 7 durch die kreissegmentförmig ausgestalteten Innenwandungen 9a des Magazingehäuses 9 geführt, in der hinteren Magazinkammer wird die Spule 8 über einen am Magazinboden 10 befestigten Stehbolzen 11, der in die zentrale Ausnehmung der Spule 8 eingreift, geführt.

Soll nun der beispielsweise auf der Spule 8 aufgewickelte Mikrorollfilm 12 von der Spule 8 auf die Spule 7 umgespult werden, so wird das Ende des auf der Spule 8 befindlichen Filmwickels am Spulenkern der Spule 7 befestigt, die volle Spule 8 in die hintere Magazinkammer 6b eingesetzt und die leere Spule 7 in die vordere Magazinkammer eingelegt. Anschließend wird das Umspulmagazin 6 in den Magazinschacht 4 bis auf Anschlag eingeschoben. Durch Drehen eines neben dem Magazinschacht angeordneten Betätigungsknopfes 13 wird bewirkt, daß ein im Geräte-Unterteil 2 angeordneter Wickeldorn in die zentrale Ausnehmung 7a der Spule 7 eingefahren wird und die Spule 7 in Pfeilrichtung B angetrieben wird. Durch Drehen des Betätigungsknopfes 13 werden andere Funktionen der Filmtransporteinrichtung des Lesegerätes, wie Filmausfädelungseinrichtung, Transportwalzen und dergleichen nicht in Betrieb gesetzt. Es wird lediglich derjenige Teil der Transporteinrichtung in Gang gesetzt, der den Antrieb der Spule 7 bewirkt.

Nachdem der rückwärtige Teil des Umspulmagazins aus dem Magazinschacht 4 des Lesegerätes herausragt, kann der Benutzer ohne weiteres feststellen, zu welchem Zeitpunkt der Umspulvorgang beendet ist. Durch Drehen des Knopfes 13 in die Nullstellung und Betätigen des Auswurfhebels 14 wird das Umspulmagazin 6 wieder freigegeben und kann dem Gerät entnommen werden.

**Ansprüche**

1. Magazin mit einer Spule (7) für Mikrorollfilm, welches in ein Mikrofilm-Lesegerät (1) mit einer Antriebsvorrichtung für eine in einem Projektionsmagazin befindliche Vorratsspule einsetzbar ist, dadurch gekennzeichnet, daß das Magazin (6) als Umspulmagazin (6) ausgebildet ist und daß im Magazin (6) neben dem Raum (6a) für eine erste, mit der Antriebsvorrichtung koppelbare Spule (7) ein weiterer Raum (6b) vorgesehen ist, in den eine zweite Spule (8) zum Umspulen auf die erste Spule (7) einsetzbar ist.

2. Magazin nach Anspruch 1, welches in ein Mikrofilm-Lesegerät einschiebbar ist, dadurch gekennzeichnet, daß die beiden Spulen (7, 8) in Einschubrichtung (A) gesehen hintereinander angeordnet sind.

3. Magazin nach Anspruch 1 oder 2, dadurch gekennzeichnet, daß es nach oben hin zum Einlegen der Spulen (7, 8) geöffnet ist.

4. Mikrofilm-Lesegerät mit einer Transporteinrichtung zum Transport von Mikrorollfilm durch das Lesegerät, wobei diese Transporteinrichtung eine Antriebsvorrichtung für die Spule eines in Betriebsstellung innerhalb des Gerätes befindlichen Magazins umfaßt, zur Aufnahme eines Magazins nach einem der vorhergehenden Ansprüche, dadurch gekennzeichnet, daß ein eigenes Betätigungselement (13) zum Inbetriebsetzen ausschließlich der Antriebsvorrichtung für die Filmspule (7) vorgesehen ist.

**Claims**

1. Magazine comprising a spool (7) for microrollfilm, which can be inserted in a microfilm reader (1) with a drive device for a supply spool disposed in a projection magazine, characterised in that the magazine (6) is formed as a rewinding magazine (6) and in that, next to the space (6a) in the magazine (6) for a first spool (7), which can be coupled to the drive device, a further space (6b) is provided in which a second spool (8) for rewinding onto the first spool (7) can be inserted.

2. Magazine according to claim 1, which can be inserted in a microfilm reader, characterised in that the two spools (7, 8) are arranged one behind the other when viewed in the direction of insertion (A).

3. Magazine according to claim 1 or 2, characterised in that it is open to the rear so that the spools (7, 8) can be inserted.

4. Microfilm reader comprising a conveying device for conveying microrollfilm through the reader, which conveying device comprises a drive device for the spool of a magazine disposed inside the reader in the operating position, for accommodating a magazine according to one of the preceding claims, characterised in that an individual actuating element (13) is provided solely to start the drive device for the film spool (7).

**Revendications**

1. Magasin comprenant une bobine (7) pour un rouleau de microfilm, qui peut être utilisé dans un appareil lecteur de microfilm (1) ayant un dispositif d'entraînement pour une bobine de réserve se trouvant dans un magasin de projection, caractérisé en ce que le magasin (6) est agencé en magasin de rebobinage (6) et en ce qu'il est prévu dans le magasin (6), à côté de la chambre (6a) pour une première bobine (7) pouvant être accouplée au dispositif d'entraînement, une autre chambre (6b), dans laquelle une seconde bobine (8) pour le rebobinage sur la première bobine (7) peut être placée.

2. Magasin selon la revendication 1, qui peut être introduit dans un appareil lecteur de microfilm, caractérisé en ce que les deux bobines (7, 8) sont disposées l'une derrière l'autre suivant le sens d'introduction (A).

3. Magasin selon la revendication 1 ou 2, caractérisé en ce qu'il est ouvert vers le haut pour la mise en place des bobines (7, 8).

4. Appareil lecteur de microfilm qui comprend un dispositif de transport pour le transport d'un rouleau de microfilm dans l'appareil lecteur, le dispositif de transport comprenant un dispositif d'entraînement de la bobine d'un magasin, qui se trouve en position de fonctionnement à l'intérieur de l'appareil et qui est destiné à recevoir un magasin suivant l'une des revendications précédentes, caractérisé en ce qu'il est prévu un élément de manœuvre (13) propre pour la mise en fonctionnement exclusivement du dispositif d'entraînement de la bobine de film (7).